# EUROPÄISCHE PATENTSCHRIFT

(11) **EP 0 587 061 B1**
(45) Veröffentlichungstag und Bekanntmachung des Hinweises auf die Patenterteilung: **05.03.1997**
(21) Anmeldenummer: 93114128.7
(22) Anmeldetag: 03.09.1993
(51) Int. Cl.: C09D 175/04, C08J 7/04, C08L 23/12

(54) **Wässriges Überzugsmittel und wässrige Emulsion, Verfahren zu deren Herstellung und deren Verwendung**
Aqueous coating and aqueous emulsion, process for their preparation and their use
Revêtement aqueux et émulsion aqueuse, procédé de leur préparation et leur utilisation

(30) Priorität: 08.09.1992 DE 4229982
(43) Veröffentlichungstag der Anmeldung: 16.03.1994
(73) Patentinhaber: Herberts Gesellschaft mit beschränkter Haftung, 42285 Wuppertal (DE)
(72) Erfinder: Diener, Wolfgang, Dr., D-42113 Wuppertal (DE); Krieter, Manuela, D-42287 Wuppertal (DE); Obloh, Ronald, Dr., D-44339 Dortmund (DE); Schreiber, Peter, Dr., D-45529 Hattingen (DE)
(74) Vertreter: Türk, Gille, Hrabal, Leifert

(56) Entgegenhaltungen:
- EP-A- 0 466 136
- WO-A-90/12056
- CHEMICAL ABSTRACTS, vol. 101, no. 10, 3. September 1984, Columbus, Ohio, US; abstract no. 74446a, Seite 93 ; & JP-A-58 222 159 (ASAHI PENN CHEMICAL CO.) 23. Dezember 1983
- CHEMICAL ABSTRACTS, vol. 101, no. 10, 3. September 1984, Columbus, Ohio, US; abstract no. 74446a, Seite 93 ; & JP-A-58 222 159

## Beschreibung

Die Erfindung betrifft wäßrige Überzugsmittel auf der Basis von Polyolen, die mit Polyisocyanaten vernetzt werden können und chlorierte Polyolefine als Haftvermittler enthalten. Sie betrifft auch die Herstellung der wäßrigen Überzugsmittel ausgehend von wäßrigen chlorierte Polyolefine enthaltenden Emulsionen sowie die Verwendung der Überzugsmittel zum Beschichten von insbesondere Kunststoffteilen.

Wäßrige Zweikomponentensysteme auf der Basis von Epoxidharzen und Aminoharzen sind in der noch nicht veröffentlichten Deutschen Patentanmeldung P 41 23 860 beschrieben. Dabei werden spezielle Dispersionen aus Epoxidharzen, Aminoharzen, sowie Polyurethanen hergestellt und diese zusammen mit Pigmenten und Additiven zu Grundierungen für die Automobilindustrie verarbeitet. In der EP-A-0 358 979 werden wäßrige Zweikompontenten-Beschichtungsmittel beschrieben, die aus einer Acrylatkomponente und einer Polyisocyanatkomponente bestehen. Diese Überzugsmittel sind für die Beschichtung von Metallsubstraten geeignet, bei Beschichtung von Kunststoffsubstraten, besonders bei Polyolefinen ist jedoch eine ausreichende Haftung zum Untergrund nicht gegeben. Dieser Effekt zeigt sich beispielsweise deutlich in der fehlenden Wasserfestigkeit der beschichteten Substrate. Ein weiterer Mangel der Überzugsmittel besteht darin, daß keine dicken Schichten erzeugt werden können. Bei höheren Schichtstärken treten Fehlstellen, wie Kocher oder Nadelstiche, auf. Aus der DE-A 39 10 901 und der entsprechenden WO 90/12056 sind wäßrige Beschichtungszusammensetzungen für Kunststoffteile bekannt, die Wasser, ein filmbildendes Bindemittelsystem, chlorierte Polyolefine (CPO), sowie gegebenenfalls Pigmente und Additive enthalten. Als filmbildende Bindemittel werden Acrylatharze oder Polyurethanharze beschrieben, die in wäßriger Emulsion vorliegen. Bei der Applikation des Beschichtungsmittels trocknen diese Systeme physikalisch. Zur Herstellung dieses Beschichtungsmittels müssen spezielle Emulgatoren, sowie ein Schmelzverfahren für die chlorierten Polyolefine und der Verfahrensschritt einer azeotropen Destillation aller organischen Lösungsmittelbestandteile durchgeführt werden. Dies ist sehr aufwendig.

In der noch nicht veröffentlichen Deutschen Patentanmeldung P 41 31 127 werden Haftgrundierungsmittel auf der Basis von chlorierten Polyolefinen, organischem Lösungsmittel, Wasser, Emulgatoren, sowie Pigmenten und gegebenenfalls einem filmbildenden Bindemittel beschrieben, die als Überzugsmittel für die Kunststofflackierung eingesetzt werden. Es handelt sich in diesem Fall um physikalisch trocknende Systeme, d.h. eine chemische Umsetzung des Überzugfilms findet nicht statt. Werden auf solche Grundierungsschichten lösungsmittelhaltige Lacke aufgetragen, so muß darauf geachtet werden, daß das Grundierungsmittel nicht wieder angelöst wird. Es kann sonst zu Störungen in den lackierten Oberflächen kommen.

In der EP-A-0 466 136 werden spezielle wäßrige Überzugsmittel zur Beschichtung von Kunststoffsubstraten beschrieben, die eine Kombination von Olefinharzen, Urethanharzen und Epoxidharzen enthalten. Als Olefin kann z.B. chloriertes Polypropylen eingesetzt werden.

Aufgabe der vorliegenden Erfindung ist die Bereitstellung von wäßrigen Überzugsmitteln, die zum Beschichten von Kunststofformteilen, insbesondere in der Automobilindustrie geeignet sind, die zu Überzügen mit einer guten Kaltschlagzähigkeit sowie einer glatten störungsfreien Oberfläche auch in dicken Schichten führen.

Diese Aufgabe wird erfindungsgemäß gelöst durch ein wäßriges Überzugsmittel auf der Basis eines oder mehrerer Polyole mit ionischen oder in ionische Gruppen überführbaren Gruppen, das Pigmente, Füllstoffe und/oder weitere lackübliche Additive enthalten kann, und dadurch gekennzeichnet ist, daß es enthält:
A) 10 bis 40 Gew.-% eines oder mehrerer Polyole mit einem Zahlenmittel der Molmasse (Mn) von 500 - 200000, einer OH-Zahl von 15 bis 300 mg KOH/g Festharz und einem Gehalt von 5 - 400 Milliäquivalenten/100 g Festharz, ionischen Gruppen und/oder in ionische Gruppen überführbaren Gruppen, die zumindest teilweise in neutralisierter Form vorliegen, wobei die ionischen Gruppen bevorzugt anionisch sind,
B) 0,5 bis 10 Gew.-% eines oder mehrerer chlorierter Polyolefine mit einem Chlorierungsgrad von 15 bis 35 Gew.-%,
C) 5 bis 40 Gew.-% eines oder mehrerer aromatischer Lösemittel mit einem Siedebereich von 100 - 160°C,
D) 25 bis 75 Gew.-% Wasser,
E) 0 bis 30 Gew.-% eines oder mehrerer weiterer wasserverdünnbarer Bindemittel, die keine NCO-reaktiven Gruppen tragen,
   wobei sich die Summe der Gew.-% der Komponenten A) bis E) auf 100 Gew.-% addiert, und
F) ein oder mehrere Polyisocyanate mit im Durchschnitt mindestens zwei freien Isocyanatgruppen pro Molekül, in einer derartigen Menge, daß die Anzahl der reaktiven Isocyanatgruppen zu den OH-Gruppen der Polyole im Verhältnis von 0,5 : 1 bis 5 : 1 liegt,
wobei das Überzugsmitel als Zweikomponenten (2K)-System vorliegt und eine Komponente die Polyole und die andere Komponente die Polyisocyanate enthält.

Es hat sich gezeigt, daß die erfindungsgemäßen Überzugsmittel hergestellt werden können aus wäßrigen Emulsionen eines oder mehrerer chlorierter Polyolefine mit einem Chlorierungsgrad von 15 bis 35 Gew.-%, die im wesentlichen oder gänzlich frei von Emulgatoren hergestellt werden können, wenn sie zusammen mit Polyolen dispergiert werden, bei denen es sich um solche handelt, die in den erfindungsgemäßen wäßrigen Überzugsmitteln Verwendung finden. Es ist jedoch auch möglich, die erfindungsgemäßen Überzugsmittel auf andere Weise zu bereiten, wobei die chlorierten Polyolefine beispielsweise unter Emulgatorzusatz eingesetzt werden können.

Bei den erfindungsgemäßen Überzugsmitteln handelt es sich insbesondere um Zweikomponentensysteme, von denen eine Komponente die Polyole und die andere die Polyisocyanate umfaßt. Die Polyolkomponente liegt in wasserverdünnter Form vor; die Polyisocyanatkomponente ist zusammen mit der Polyolkomponente in Wasser dispergierbar. Die chlorierten Polyolefine, sowie die gegebenenfalls vorhandenen Pigmente, Füllstoffe und weiteren lacktechnischen Additive können in einer der beiden oder in beiden Komponenten enthalten sein. Es versteht sich, daß die in der Polyolkomponente A) dispergierten Substanzen wasserverträglich sein sollten, um eine ausreichende Lagerstabilität zu gewährleisten. Additive für die Polyisocyanat-Vernetzerkomponente sollten mit den Polyisocyanaten nicht reagieren. Im allgemeinen ist es günstig, organophile Substanzen in der Polyisocyanatkomponente dispergiert einzusetzen.

Bei der erfindungsgemäß einsetzbaren Polyol-Komponente A handelt es sich insbesondere um Bindemittel auf Basis von radikalisch polymerisierbaren Monomeren, die OH-Gruppen enthalten, OH-gruppenhaltige Polyester und/oder OH-gruppenhaltige Polyurethane. Die zahlenmittlere Molmasse liegt zwischen 500 - 200.000, die Hydroxylzahl zwischen 15 und 300 mg KOH/g Festharz. Die Wasserdispergierbarkeit wird durch polare Gruppen erzeugt, z.B. OH-Gruppen, Ethergruppen, Urethangruppen, ionische Gruppen oder in ionische Gruppen überführbare Gruppen. Es sind kationische oder in kationische Gruppen überführbare Substituenten möglich, z.B. Aminogruppen; besonders geeignet sind jedoch anionische oder in anionische Gruppen überführbare Substituenten, z.B. Carboxylgruppen, Phosphorsäuregruppen sowie Sulfonsäuregruppen. Bevorzugt sind Polymere mit Carboxylgruppen. Der Gehalt an ionischen Gruppen beträgt 5 - 400 Milliäquivalente/100 g Festharz. Die Polyolkomponente liegt in Form einer wäßrigen Dispersion vor, die Viskosität soll 100 - 10.000 mPas bei 23°C betragen. Der pH-Wert liegt zwischen 5 - 10.

Beispiele für geeignete COOH- und OH-gruppenhaltige Polymere auf Basis von olefinisch ungesättigten Monomeren sind in der EP-A-0 358 979 beschrieben. Es handelt sich um wäßrige Dispersionen auf Basis von olefinisch ungesättigten Monomeren. Diese Monomere können entweder ohne Funktionalitäten sein, beispielsweise Styrol, (Meth)acrylsäurealkylester mit C₁ - C₈ in der Seitenkette, Vinylacetat oder (Meth)acrylnitril. Weiterhin können anteilsweise Monomere mit funktionellen Gruppen, z.B. Hydroxylgruppen eingesetzt werden, wie Hydroxyalkylester der (Meth)acrylsäure, beispielsweise 2-Hydroxyethylacrylat oder 2-Hydroxypropylacrylat. Weiterhin können andere reaktive Gruppen eingeführt werden, z.B. Epoxidgruppen oder Amidgruppen, über Monomere, wie z.B. Glycidyl(meth)acrylat oder N-Methoxymethyl(meth)acrylamid. Die ionischen Gruppen können über olefinisch ungesättigte Monomere eingeführt werden, die in ionische Gruppen überführbare Funktionalitäten aufweisen, beispielsweise olefinisch ungesättigte Mono- oder Dicarbonsäuren des Molekulargewichts 72 - 207, wie z.B. Acrylsäure, Maleinsäure, Itaconsäure und gegebenenfalls Halbester davon oder über Verbindungen wie 2-Acrylamido-2-Methylpropansulfonsäure.

Die Herstellung der Polymerisate erfolgt nach üblichen Verfahren, z.B. als Lösungspolymerisation. Dabei sind kontinuierliche und diskontinuierliche Verfahren möglich. Die Copolymerisation erfolgt im allgemeinen unter Einsatz von Initiatoren und gegebenenfalls Reglern bei Temperaturen von 50 bis 160°C. Sie erfolgt in einer Flüssigkeit, in der sich Monomere oder Polymere gemeinsam lösen. Als Lösungsmittel sind solche organischen Lösungsmittel bevorzugt, die bei der späteren Lackformulierung nicht stören. Das sind bevorzugt zumindest teilweise mit Wasser mischbare organische Lösungsmittel. Die Initiatoren werden im allgemeinen in Mengen von 0,1 bis 3 Gew.,-%, bezogen auf die Monomermenge, eingesetzt; es handelt sich um Peroxide und/oder Azoverbindungen und/oder Perester. Beispiele dafür sind Benzoylperoxid, Cumolhydroperoxid, tert.-Butylperoctoat oder 2,2-Azo-bis(2-Cyanopropan).

Durch den Einsatz von Reglern kann die Molmasse in bekannter Weise herabgesetzt werden, bevorzugt werden hierzu Mercaptane, halogenhaltige Verbindungen oder andere radikalübertragende Substanzen. Beispiele dafür sind n-Dodecylmercaptan, Butan-1-ol oder dimeres α-Methylstyrol.

Als Lösungsmittel bei der Polymerisation kommen beispielsweise Aromaten wie Toluol, Xylol; Ester wie Ethylacetat, Butylacetat, Ethylglycolacetat, Ether wie Butylglycol oder Ethylglycolether, Ketone wie Aceton oder Methylethylketon in Frage. Die Lösungsmittel können gegebenenfalls vor oder nach Verdünnen der Polymerisate in Wasser durch Destillation, bevorzugt im Vakuum, entfernt werden.

Das Molekulargewicht der Bindemittel auf Basis von radikalisch polymerisierbaren Monomeren beträgt bevorzugt Mn (Zahlenmittel) von 500 bis 50.000, insbesondere von 1000 - 10.000. Die Hydroxylzahl beträgt 15 - 300, bevorzugt 30 - 170 mg KOH/g Festharz. Der Gehalt an polaren bzw. anionischen Gruppen beträgt 5 - 400 Milliäquivalente pro 100 g Feststoff, bevorzugt 25 bis 280.

Beispiele für saure, wasserdispergierbare Polyurethanharze sind in der DE-A- 41 24 453 sowie der DE-A- 40 00 889 beschrieben. Es handelt sich dabei beispielsweise um Polyurethanharze, die durch Umsetzung zwei- oder mehrwertiger gesättigter linearer oder verzweigter aliphatischer oder cycloaliphatischer Polyalkohole mit linearen oder verzweigten aliphatischen, cycloaliphatischen oder aromatischen Polyisocyanaten z.B. Diisocyanaten und gegebenenfalls linearen oder verzweigten aliphatischen oder cycloaliphatischen Monoalkoholen hergestellt werden. Zur Einführung von ionischen Gruppen werden z.B. Anteile von niedrigmolekularen Dialkoholen einreagiert, die eine anionische oder zur Anionenbildung fähige Gruppe, bevorzugt eine Carboxylgruppe, enthalten.

Die Reaktion findet bei Temperaturen zwischen 20 und 150°C statt, gegebenenfalls unter Zusatz von Katalysatoren. Sie kann in der Schmelze oder in Lösung mit inerten trockenen Lösungsmitteln durchgeführt werden. Es ist auch eine stufenweise Reaktion möglich. Je nach der Menge der mehrwertigen Polyole entstehen lineare oder verzweigte Moleküle. Bei einem Überschuß an Alkoholen entstehen Kettenenden, die Hydroxylgruppen aufweisen.

Die Polyole auf Polyurethanbasis weisen bevorzugt eine OH-Zahl von 20 bis 200 auf. Die Säurezahl beträgt bevorzugt 10 bis 200, besonders bevorzugt 25 bis 150. Das Zahlenmittel der Molmasse (Mn) liegt bevorzugt bei 3000 bis 200.000. Eine bevorzugte Ausführungsform der wasserdispergierbaren Polyurethanharze für die Komponente A weist eine zahlenmittlere Molmasse von 3000 bis 50.000, eine OH-Zahl von 30 - 150 und eine Säurezahl von 25 - 70 auf. Besonderes bevorzugt sind Carboxylgruppen als in anionische Gruppen überführbare Substituenten.

Erfindungsgemäß als Polyole verwendbare hydroxylgruppenhaltige Polyester mit anionischen Gruppen werden beispielsweise in der DE-A- 32 13 160, DE-A- 28 24 418 sowie US-A 3 053 783 beschrieben. Erfindungsgemäß handelt es sich um lineare oder verzweigte, ölfreie Polyester auf der Basis von zwei- oder mehrwertigen linearen oder verzweigten aliphatischen oder cycloaliphatischen, gesättigten Polyalkoholen, sowie linearen oder verzweigten aliphatischen, cycloaliphatischen oder aromatischen zwei- oder mehrbasischen Carbonsäuren, die gegebenenfalls mit linearen oder verzweigten aliphatischen Monoalkoholen polykondensiert sein können.

Die Alkohole enthalten vorzugsweise 2 bis 21 C-Atome, die zwei- oder mehrbasischen Carbonsäuren enthalten vorzugsweise 5 bis 10 C-Atome. Beispiele für Polyalkohole sind Diole, wie 2,6-Hexandiol, Neopentylglykol, 2,2,4-Trimethylpentandiol-1,3 oder 1,4-bis-(hydroxymethyl)cyclohexan. Beispiele für Dicarbonsäuren sind Isophthalsäure, Terephthalsäure, 1,3-Cyclohexandicarbonsäure oder Butylisophthalsäure. Es können auch geringe Menge an Tricarbonsäuren oder Tri- oder Polyalkoholen zur Erzielung von Verzweigungen eingesetzt werden. Anionische Gruppen können beispielsweise zusätzlich eingebaut werden durch Umsetzung mit einem niedrigmolekularen Dialkohol, der zusätzlich eine zur Anionenbildung befähigte Säuregruppe enthält, z.B. Sulfonsäure-, Phosphorsäure oder Carboxylgruppen. Besonders bevorzugt sind Carboxylgruppen, die z.B. durch Dimethylolpropionsäure eingeführt werden.

Die Polyester können auch durch Reaktion mit Diisocyanaten im Molekulargewicht vergrößert werden. Gegebenenfalls können über reaktive Gruppen, z.B. OH-Gruppen, weitere Modifizierungen durchgeführt werden.

Die erfindungsgemäß einsetzbaren Polyester haben bevorzugt ein Molekulargewicht (Zahlenmittel, Mn) von 1500 - 15000, besonders bevorzugt von 2000 - 6000. Die OH-Zahl beträgt bevorzugt 20 bis 200, besonders bevorzugt 40 bis 150. Die Säurezahl beträgt bevorzugt 20 bis 150.

Die Herstellung der Polyester erfolgt nach bekannten Verfahren. Bevorzugt wird eine stufenweise Reaktion. Sie können beispielsweise azeotrop hergestellt werden oder in der Schmelze. Die Reaktionstemperatur liegt z.B. zwischen 150 und 240°C. Nach Erreichen der gewünschten Endwerte kann der Polyester zur Erzielung einer guten Verarbeitungsviskosität gegebenenfalls mit Lösungsmittel verdünnt werden.

Über die einsetzbaren Dicarbonsäuren oder Polyalkohole können die Polyester in ihren Eigenschaften beeinflußt werden. So erhöhen höherkettige aliphatische Alkohole die Flexibilität der Polyester, aromatische Dicarbonsäuren vermindern die Elastizität. Der Verzweigungsgrad kann über die Menge von Tricarbonsäuren zu beeinflußt werden. Die Anzahl von polaren Gruppen, z.B. OH-Gruppen, Ethergruppen, Urethangruppen oder ionischen Gruppen bestimmt die Wasserdispergierbarkeit der Bindemittel.

Die als Bindemittel erfindungsgemäß verwendbaren Polyole A) können nach Neutralisation zumindest eines Teils von vorhandenen ionischen Gruppen ohne weitere Emulgatoren in die Wasserphase überführt werden. Die entstehenden wäßrigen Systeme können echte Lösungen, kolloide disperse Systeme oder Dispersionen sein. Sie können gegebenenfalls noch herstellungsbedingt geringe Reste an organischen Lösemitteln enthalten, bzw. diese können zur Beeinflussung von Eigenschaften, wie Verlauf oder bessere Dispergierbarkeit zugesetzt werden. Das Überführen in die Wasserphase kann z.B. durch erhöhte Temperatur unterstützt werden. Es ist aber auch möglich, aus der wäßrigen Dispersion organische Lösemittel destillativ zu entfernen.

Die erfindungsgemäß einsetzbare Vernetzerkomponente F) enthält Polyisocyanate, die im Durchschnitt mindestens zwei freie Isocyanatgruppen pro Molekül aufweisen. Derartige Polyisocyanate werden beispielsweise in der EP-A 0 358 979 beschrieben. Es handelt sich dabei um organische Polyisocyanate, z.B. Diisocyanate, mit aliphatisch, cycloaliphatisch und/oder aromatisch gebundenen freien Isocyanatgruppen, die bei Raumtemperatur, gegebenenfalls unter Zusatz von Lösemitteln, flüssig sind.

Die gesamte Polyisocyanatkomponente soll eine Viskosität bei 23°C von 50 - 10000, vorzugsweise 50 - 1000 mPas aufweisen. Falls erforderlich, können verschiedene Polyisocyanate miteinander gemischt werden. Ebenso können Anteile an inerten Lösungsmitteln eingesetzt werden, um die Viskosität auf einen Wert innerhalb der Grenzen abzusenken. Bevorzugt werden Lösungsmittel dazu eingesetzt, die mit Wasser teilweise mischbar sind.

Beispiele für verwendbare Polyisocyante sind die bekannten, üblichen Lackpolyisocyanate wie beispielsweise Hexamethylendiisocyanat (HDI), Isophorondiisocyanat (IPDI), Toluylendiisocyanat (TDI) sowie Tetramethylxylylendiisocyanat (TMXDI). Diese Diisocyanate können durch bekannte Verfahren in Oligomere überführt sein, die beispielsweise Biuret-, Urethan, Uretdion- oder Isocyanuratgruppen aufweisen. Beispielsweise können sie auch mit niedrigen Alkoholen, z.B. Trimethylolpropan, umgesetzt sein. Bevorzugt werden biuretgruppenaufweisende Polyisocyanate auf Basis von HDI sowie die entsprechenden cyclischen Trimerisate von HDI eingesetzt. Ebenfalls bevorzugt ist die Verwendung von Oligomeren auf Basis TMXDI. Die Isocyanate können einzeln oder im Gemisch eingesetzt werden. Die Funktionalität liegt im Mittel bei 2 oder darüber.

Die erfindungsgemäß als Komponente B) verwendbaren chlorierten Polyolefine (CPO) sind handelsübliche Produkte. Es handelt sich beispielsweise um chloriertes Polyethylen, chloriertes Polypropylen oder chloriertes Polyethylen/Polypropylencopolymer oder um Gemische davon. Die chlorierten Polyolefine haben einen Chlorierungsgrad von 15 - 45 Gew.-%. Sie liegen im allgemeinen gelöst in organischen Lösemitteln vor. Sie können jedoch auch in wäßriger Dispersionsform eingesetzt werden.

Wie vorstehend beschrieben, stellen einen weiteren Gegenstand der Erfindung wäßrige Emulsionen von chlorierten Polyolefinen dar, die beispielsweise aus einer lösungsmittelhaltigen Form des chlorierten Polyolefins B) zusammen mit der wasserverdünnbaren Polyolkomponente A) (gänzlich oder teilweise) sowie gegebenenfalls Wasser und/oder aromatische Lösemittel, direkt hergestellt werden können. Dabei kann die Polyolkomponente A) als Bindemittel vorliegen und zusammen mit den weiteren Bestandteilen mit Wasser dispergiert werden oder es kann von einer wäßrigen Polyoldispersion ausgegangen werden. Das kann durch Mischen der Komponenten mit bekannten Dispergieraggregaten geschehen, gegebenenfalls kann eine Voremulsion weiter mit Dispergiervorrichtungen behandelt werden, z.B. Rotor-Stator-Mischern, schnellaufenden Rühraggregaten, wie Flügelrühraggregate, Ultraschallmischer oder Hochdruckhomogenisatoren. Bei dieser erfindungsgemäßen Vorgehensweise kann ohne Emulgatoren gearbeitet werden. Ebenfalls kann von CPO-Pulvern ohne Lösemittel ausgegangen werden, wobei dann die notwendigen Anteile an aromatischem Lösemittel zusammen mit dem Wasser zugesetzt werden.

Als Lösemittel können organische Lösemittel mit einem Siedebereich von 100 bis 160°C verwendet werden, insbesondere aromatische Lösemittel, wie beispielsweise Toluol, Xylol oder Gemische davon.

Die erfindungsgemäßen Emulsionen haben vorzugsweise einen Anteil von 10 bis 100 Gew.-% eines oder mehrerer aromatischer Lösemittel, mit einem Siedebereich von 100 bis 160°C, wie sie beispielsweise vorstehend angegeben wurden. Der Anteil an CPO liegt beispielsweise bei 5 bis 70 Gew.-%, jeweils bezogen auf die Polyolkomponente. Bei den erfindungsgemäß eingesetzten bzw. erfindungsgemäßen Emulsionen handelt es sich um lagerstabile Produkte, die keine Phasentrennung aufweisen. Sie können direkt zu den erfindungsgemäßen Überzugsmitteln weiterverarbeitet werden, beispielsweise durch direkten Zusatz zu dem Überzugsmittel bzw. einer oder beiden Komponenten davon.

Die erfindungsgemäß bereiteten Emulsionen können direkt zur Herstellung der erfindungsgemäßen Überzugsmittel verwendet werden. Es ist jedoch auch möglich, in den Überzugsmitteln andere Dispersionen von chlorierten Polyolefinen einzusetzen. Beispielsweise werden Dispersionen chlorierter Polyolefine (CPO) in der noch nicht offengelegten Deutschen Patentanmeldung P 41 31 127 beschrieben. Es handelt sich um wäßrige, aromatische Lösemittel enthaltende CPO-Dispersionen, die einen anionischen Emulgator enthalten. Als aromatische Lösemittel können die gleichen, wie vorstehend erwähnt, eingesetzt werden. Der Gehalt an aromatischen Lösemitteln liegt beispielsweise bei 15 - 50 Gew.-%. Die beschriebenen wäßrigen lösemittelhaltigen CPO-Dispersionen werden hergestellt durch Dispergieren des CPO als Pulver, Slurry oder organische Lösung, unter Verwendung eines Emulgators in Wasser bei erhöhter Temperatur.

Sowohl bei der erfindungsgemäßen Polyol-haltigen Emulsion, als auch bei der beschriebenen bindemittelfreien Emulsion, kann zunächst eine Voremulsion hergestellt werden, die gegebenenfalls mit Wasser, weiterem organischem Lösemittel oder Additiven auf einen geeigneten Festkörper eingestellt wird und einer weiteren Homogenisation unterzogen werden kann. Die entstehenden Dispersionen zeichnen sich durch eine gute Verteilung der Teilchengröße in der Wasserphase aus. Die Dispersionen können gegebenenfalls dem Überzugsmittel bzw. einer oder beiden Komponenten davon direkt zugesetzt werden.

Die erfindungsgemäßen Überzugsmittel können Anteile von weiteren wasserverdünnbaren Bindemitteln E) enthalten, die unter den Aushärtungsbedingungen des Überzugsmittels im wesentlichen keine zur Vernetzung mit Isocyanaten reaktiven Gruppen enthalten, z.B. wasserverdünnbare Polyurethanharze oder Acrylatharze oder Polyesterharze. Diese sollen bevorzugt als wäßrige Polymerdispersion vorliegen; sie werden dem Polyol der Komponente A zugemischt. Der Anteil derartiger Bindemittel beträgt maximal 75 Gew.-% bezogen auf die reaktiven, filmbildenden Polyole.

Die erfindungsgemäßen Überzugsmittel können weiterhin übliche lacktechnische Additive enthalten, wie beispielsweise Entschäumer, Netzmittel, Verdicker, Antikratermittel, Verlaufsmittel, Lichtschutzmittel oder Katalysatoren. Die zugesetzten Stoffe müssen mit dem Überzugsmittel bzw. der Komponente, in die eingemischt werden, verträglich sein oder eine lagerstabile Form bilden. Falls der Anteil der notwendigen Lösemittel nicht über die CPO-Emulsion oder die Bindemittel eingebracht wird, ist auch ein weiterer Zusatz von organischen Lösemitteln zu den Überzugsmitteln möglich. Es können lackübliche Lösemittel, insbesondere aromatische Lösemittel, zugesetzt werden, die dem Fachmann geläufig sind. Die Gesamtmenge liegt bei 5 bis 40 Gew.-%.

Weiterhin können die erfindungsgemäßen Überzugsmittel organische und/oder anorganische Pigmente und/oder Füllstoffe enthalten. Beispiele dafür sind organische oder anorganische Buntpigmente, Effektpigmente, wie Metallicpigmente, Glimmer, Aluminiumsilikat, Titandioxid, Bariumsulfat, hochdisperse Kieselsäuren, sowie Korrosionsschutzpigmente. Ebenso ist es möglich, Anteile von vernetzten organischen, teilchenförmigen Polymeren als Füllstoffe zuzusetzen. Die Pigmente und/oder Füllstoffe weisen bevorzugt eine Kornfeinheit von gleich oder weniger als 15 µm auf. Diese kann durch Vermahlen er Pigmente in Hilfsmitteln, z.B. Pasten- oder Netzharzen, erzielt werden. Die Verfahren zum Dispergieren der Pigmente sind in der Literatur beschrieben und dem Fachmann geläufig.

Zur Herstellung der erfindungsgemäßen Überzugsmittel liegen die filmbildenden Harze in die Wasserphase überführt vor. Dabei sind diese gegebenenfalls vor oder nach der Überführung, ganz oder teilweise zu neutralisieren, um eine stabile wäßrige Emulsion zu erhalten. In der Bindemittelkomponente ist die lösungsmittelhaltige CPO-Zubereitung enthalten, entweder als wäßrige lösungsmittelhaltige Dispersion oder als emulgierte organische Lösung, sowie gegebenenfalls weitere nichtreaktive wäßrige Bindemittel. Weiterhin können in dieser Komponente gegebenenfalls Additive und/oder Pigmente sowie Füllstoffe enthalten sein. Werden die Pigmente direkt in der wäßrigen Bindemittelmischung dispergiert, so ist darauf zu achten, daß durch den Mahlprozeß die Stabilität der Dispersion nicht beeinträchtigt wird. Andernfalls kann man bereits vermahlene wäßrige Pigmentzubereitungen, z.B. sogenannte Pigmentpasten, zu der Bindemitteldispersion zumischen.

Die erfindungsgemäßen Überzugsmittel liegen als 2K-Systeme vor.

Die zweite Komponente enthält das Polyisocyanat F). Ebenfalls können in diesem Bestandteil weitere Additive, z.B. Antischaummittel, zur Erzielung von lacktechnischen Effekten sowie Pigmente enthalten sein. Ebenso ist es möglich, daß auch in dieser Komponente zumindest ein Anteil an CPO eingearbeitet wird. Es ist darauf zu achten nur solche Bestandteile zu den Polyisocyanaten zu fügen, deren reaktive Gruppen nicht mit den reaktiven Isocyanatgruppen abreagieren können. Gegebenenfalls kann durch Zugabe von inerten Lösemitteln die Viskosität der Komponente eingestellt werden.

Das fertige Überzugsmittel wird erhalten, indem die Polyisocyanat-Komponente in der wäßrigen Dispersion der Bindemittel Komponente dispergiert wird. Dabei werden die Mengen so gewählt, daß die Anzahl der reaktiven NCO-Gruppen zu der Anzahl der OH-Gruppen im Verhältnis 0,5 : 1 bis 5 : 1, bevorzugt 0,8 : 1 bis 2 : 1 liegt. Es ist auf ein gutes Vermischen der Komponenten zu achten.

Eine bevorzugte Ausführungsform des erfindungsgemäßen Überzugsmittels enthält
10 - 40 Gew.-% Bindemittel und Vernetzer
0,5 - 7 Gew.-% CPO
5 - 30 Gew.-% aromatische Lösemittel
0 - 25 Gew.-% Pigmente/Füllstoffe
0 - 15 Gew.-% weitere Bindemittel sowie
25 - 75 Gew.-% Wasser.

Je nach Applikationsart kann das Überzugsmittel mit Wasser auf eine geeignete Viskosität eingestellt werden. Die Art und Menge der Pigmente und Füllstoffe wird nach dem Verwendungszweck ausgewählt. So liegt für Grundierungen der Pigmentgehalt im oberen Bereich, bei Verwendung als Decklack-Überzug liegt der Pigmentanteil meist im niedrigeren Mengenbereich und es werden Bunt- oder Effektpigmente ausgewählt, bei Verwendung als Klarlack werden keine Pigmente eingesetzt, es können aber durch durchscheinende Pigmente verwendet werden.

Als Substrate für das erfindungsgemäße Überzugsmittel sind alle Metall- oder Kunststoffsubstrate geeignet. Besonders geeignet sind Kunststoffsubstrate. Beispiel dafür sind modifizierte oder nicht modifizierte Polyolefine, insbesondere Polyethylen oder Polypropylen, Polycarbonat, Polyamid, ABS-Polymere, Polyurethane oder Polyester. Besonders bevorzugt ist die Verwendung auf Polyolefin-Substraten.

Die Applikation erfolgt nach bekannten Verfahren, wie z.B. Streichen, Rollen, Spritzen oder Fluten. Es kann direkt auf das gereinigte Substrat aufgetragen werden, eine Haftgrundierung ist nicht notwendig. Die Schichtdicke beträgt bevorzugt zwischen 5 - 75 µm. Überraschenderweise wird auch bei hoher Schichtdicke eine gute glatte Oberfläche ohne Kocher oder Nadelstiche erhalten.

Die Vernetzung des Überzugsmittels geschieht z.B. bei Temperaturen zwischen 10 und 120°C, bevorzugt zwischen 40 und 100°C. Dabei kann die Vernetzungsgeschwindigkeit gegebenenfalls durch Zufügen eines üblichen Katalysators beeinflußt werden. Gegebenenfalls ist es möglich, nach Applikation des Überzugsmittels erst eine Ablüftphase bei niedrigen Temperaturen vorzusehen und danach durch Erwärmen die Vernetzung einzuleiten. Je nach Temperaturempfindlichkeit der Substrate kann die Vernetzungstemperatur des Überzugsmittels gewählt werden.

Nach dem Vernetzen erhält man homogen beschichtete Substrate, z.B. Kunststoffsubstrate, mit einer guten Haftung zwischen Film und Untergrund. Die Oberfläche, auch in dicken Schichten, ist glatt und störungsfrei. Die Haftung nach Überlackierung ist gut. Es ist möglich, hohe Schichtdicken aufzutragen, ohne daß Störungen in der Filmoberfläche, z.B. Kocher oder Läufer, auftreten. Die mechanischen Eigenschaften des lackierten Gegenstandes, z.B. die Schlagzähigkeit, werden nicht negativ beeinflußt, insbesondere auch nicht in der Kälte. Die Überzugsmittel sind besonders geeignet zur Verwendung als Basislackschicht in Mehrschichtlackierungen. Auf die so erhaltenen Überzüge können ein oder mehrere weitere Überzüg, z.B. Klarlacküberzüge, Steinschlagschutzüberzüge oder Basis/Decklacküberzüge appliziert werden. Die so erhaltenen Mehrschichtaufbauten zeigen eine gute Haftung zum Substrat und eine gute Kälteelastizität. Sie können ohne zusätzlichen Haftprimer verwendet werden. Eine weitere bevorzugte Ausführungsform ist die Verwendung als Einschichtdecklack. Die erfindungsgemäßen Überzugsmittel eignen sich besonders für die Lackierung von Kunststoffteilen in der Automobilindustrie oder Zulieferindustrie. Sie können jedoch auch zum Beschichten von anderen, besonders temperaturempfindlichen Kunststoffsubstraten eingesetzt werden.

Die folgenden Beispiele erläutern die Erfindung. Prozentangaben beziehen sich auf das Gewicht, sofern nicht anders angegeben.

### Beispiel 1

Herstellung eines Acrylatharzes nach Beispiel G der EP-A-0 358 979
A) In einem 3 1-Rührautoklaven mit Rückflußkühler, wirksamem Rührer sowie Gaseinlaß und -auslaß werden 900 g Essigsäure-n-butylester vorgelegt und mit Stickstoff gespült. Anschließend wird Stickstoff in einem stetigen Strom übergeleitet und die Vorlage unter Rühren bei ca. 200 U/min. auf eine Innentemperatur von 110°C erwärmt. Anschließend wird eine Mischung aus 459 g Methacrylsäure-2-hydroxyethylester, 231 g Methacrylsäuremethylester, 600 g Acrylsäure-n-butylester, 150 g Acrylsäure und 50 g Azoisobutyronitril im Verlauf von 4 Stunden gleichmäßig zudosiert. Nach beendetem Zulauf wird ca. 30 Minuten nachgerührt und danach mit einer Mischung aus 10 g t-Butylperoctoat und 100 g Essgisäure-n-butylester nachaktiviert. Die Nachreaktionszeit beträgt 6 Stunden. Anschließend werden bei einem Vakuum von ca. 200 bis 400 mbar ca. 100 ml Restmonomere zusammen mit dem Lösemittel Essigsäure-n-butylester abdestilliert. Die abdestillierte Menge wird durch frisches Lösemittel ersetzt. Das im organischen Lösemittel gelöste Polymerharz besitzt eine Konzentration von 58,9 Gew.-%, eine Viskosität (Pa.s 23°C) von 6,0, eine Hydroxylzahl (mg KOH/g Lösung) von 79,7 und eine Säurezahl (mg KOH/g Lösung) von 46,6.
   Um die organische Lösung in eine wäßrige Lösung bzw. Dispersion zu überführen, wird in einem 8 L-Reaktor eine Mischung von 3500 g entionisiertem Wasser und 143 g wäßriger Ammoniaklösung (25 %) vorgelegt und unter Rühren auf ca. 95°C erwärmt. Anschließend wird die organische Polymerlösung im Verlauf von ca. 0,5 bis 1 Stunde zudosiert und gleichzeitig Essigsäure-n-butylester durch Azeotropdestillation entfernt. Die Menge an abdestilliertem Wasser wird dabei kontinuierlich ersetzt. Mit einer ca. 25 %igen wäßrigen Ammoniaklösung wird auf einen pH-Wert zwischen 7 und 8 eingestellt. Die erhaltene wäßrige Polymerisatlösung weist einen Lösemittelgehalt von unter 2 % auf. Die Polymerisatkonzentration liegt bei 26,5 Gew.-%; der pH-Wert bei 7,0, die Viskosität (Pa.s, 23°C) bei 1,8, der Carboxylatgruppengehalt (Mequiv/100 g Feststoff) bei 139. Die Säurezahl beträgt 0.
B) 29 Gew.-% einer 25 %igen Lösung eines chlorierten Polypropylens mit einem Chlorgehalt von 18 % in Xylol werden zu 66 % der vorstehend unter A) beschriebenen 26,5 % Dispersion des Acrylatharzes nach EP-A-0 358 979 Beispiel G und 5 % Wasser gemischt. Die Mischung wird mit einem Flügelrührer bei 23°C mit ca. 9000 U/min. und exzentrischer Rührgeometrie gründlich homogenisiert. Dabei dürfen keine toten Zonen in dem zu dispergierenden Material entstehen. Die CPO-Lösung wird langsam zugegeben. (Festkörper ca. 25 %).

### Beispiel 2

Herstellung einer wäßrigen PU-Dispersion nach DE-OS 40 00 889
A) In einem Reaktionsgefäß mit Innenthermometer und Rückflußkühler werden 1687 g eines linearen gesättigten Polyesters (aufgebaut aus Adipinsäure, sowie Neopentylglykol und Hexandiol-1,6 im Molverhältnis 1 : 1) mit einer Säurezahl unter 1, einer OH-Zahl von 130 und einer Viskosität von 275 mPa.s (gemessen in 90 %iger Lösung in Aceton bei 25°C) unter gutem Rühren mit 182,5 g Dimethylolpropionsäure und 525 g trockenem Aceton gemischt. Nach Zusatz von 803 g Dicyclohexylmethan-diisocyanat wird langsam auf 70°C aufgewärmt. Diese Reaktionstemperatur wird gehalten bis der NCO-Gehalt unter 0,2 % liegt. Nach Abkühlen auf 60°C werden 875 g Butoxyethanol zugegeben und anschließend wird das Aceton gegebenenfalls unter Anlegen von Vakuum abdestilliert.

| | |
|---|---|
| Festkörper (30 Min. 150°C): | 75 Gew.-% |
| Säurezahl (bezogen auf Festharz): | 29 |
| Viskosität bei 25°C: | ca. 7 Pa.s |
| (nach Verdünnen auf 60 Gew.-% mit Butoxyethanol) | |

Es wird anschließend bei 80°C ein Gemisch aus 108 g Dimethylaminoethanol und 108 g Wasser in 15 Minuten zugegeben. Danach wird langsam mit 5150 g Wasser verdünnt. Die gewünschte Viskosität von 12 Pa.s wird durch Zusatz von weiteren 3,8 g Dimethylaminoethanol-Wasser-Gemisch eingestellt. Es entsteht eine hoch-viskose praktisch klare Paste mit einem Festkörper von 35 Gew.-% und einem MEQ-Amin-Wert von 23,5 (mÄquiv. Amin pro 100 g Festharz). Der Neutralisationsgrad beträgt 81 % und die mittlere Teilchengröße ist 36 nm.
B) Es werden 50 Gew.-% der unter A) erhaltenen wäßrigen PU-Dispersion nach DE-OS 40 00 889 (FK = 35 %) vorgelegt, mit 14 % Wasser vermischt und langsam mit 26 % einer 25 %igen Lösung eines chlorierten Polypropylens mit einem Chlorgehalt von 18 % in Xylol vermischt. Die Mischung wird mit einem Flügelrührer bei 23°C mit ca. 9000 U/min. und exzentrischer Rührgeometrie gründlich homogenisiert. Dabei dürfen keine toten Zonen in dem zu dispergierenden Material entstehen. (FK ca. 24 %). Die entstehenden wäßrigen, lösungsmittelhaltigen Emulsionen sind lagerstabil und können zu Überzugsmitteln weiterverarbeitet werden.

### Herstellungsbeispiel 3

A) Herstellung eines wäßrigen Acrylatharzes nach EP-A-0 358 979 Beispiel F
   Es wird vorgegangen wie in Beispiel 1 A), wobei jedoch die 231 g Methacrylsäuremethylester durch 381 g Methacrylsäuremethylester und die 600 g Acrylsäure-n-butylester durch 450 g Acrylsäure-n-butylester ersetzt werden. Man erhält zunächst eine organische Lösung an Polymerisatharz mit einer Konzentration von 60,9 Gew.-%, einer Viskosität (Pa.s, 23°C) von 20,8, einer Hydroxylzahl (mg KOH/g Lösung) von 80,8 und einer Säurezahl (mg KOH/g Lösung) von 48,6. Die endgültig erhaltene wäßrige Dispersion des Acrylatharzes weist eine Konzentration von ca. 28 %, einen pH-Wert von 7,1, eine Viskosität (Pa.s, 23°C) von 5,7, einen Carboxylatgruppengehalt (Mequiv./100 g Feststoff) von 139 und eine Säurezahl von 0 auf.
B) Es werden 34,5 % des vorstehend unter A) erhaltenen wäßrigen Acrylatharzes nach EP-A-0
   358 979 Beispiel F (FK ca. 28 %) mit 4,0 % vollentsalztem Wasser und einer Vormischung aus 0,15 % eines handelsüblichen Acrylatverdickers (Acrysol RM 8) mit 0,95 % Wasser vermischt. Es werden 0,15 % eines handelsüblichen ionischen Emulgators und 0,15 % eines Entschäumers zugesetzt und homogenisiert. In diese Mischung werden 17,4 % Titandioxid, 3,8 % Talkum und 0,05 % Ruß nacheinander eindispergiert. Nach Einstellen der Viskosität mit ca. 1,75 % Wasser wird die Mischung 30 min. auf einer Perlmühle vermahlen.
   Zu dieser Mischung wird eine stabile Emulsion nach P 41 31 127 aus 9,65 % eines handelsüblichen CPO (Festkörper 25 % in Xylol), 0,65 % eines Emulgators auf Alkylsulfonatbasis sowie 9,0 % vollentsalztem Wasser langsam zugerührt. Es entsteht eine lagerstabile wäßrige CPO/Xylol-haltige Komponente.

### Herstellungsbeispiel 4

Es werden 32,35 % des im Herstellungsbeispiel 3 A) erhaltenen wäßrigen Acrylatharzes nach EP-A-0 358 979 Beispiel F (FK ca. 28 %) mit 3,9 % vollentsalztem Wasser und einer Vormischung aus 0,15 % eines handelsüblichen Acrylatverdickers mit 0,95 % Waser vermischt. Es werden 0,15 % eines handelsüblichen Emulgators und 0,15 % eines Entschäumers zugesetzt und homogenisiert. In diese Mischung werden 16,3 % Titandioxid, 3,6 % Talkum und 0,05 % Ruß nacheinander eindispergiert. Nach Einstellen der Viskosität mit ca. 1,6 % Wasser wird die Mischung 30 min. auf einer Perlmühle vermahlen.

Zu dieser Mischung wird eine stabile Emulsion aus 15,1 % eines handelsüblichen CPO (Festkörper 25 % in Xylol), 1,0 % eines Emulgator auf Alkylsulfonatbasis sowie 14,1 % vollentsalztem Wasser langsam zugerührt. Es entsteht eine lagerstabile wäßrige CPO/Xylol-haltige Komponente.

### Herstellungsbeispiel 5

Es werden 55,0 % einer Emulsion nach Beispiel 1 mit einer Vormischung aus 0,15 % eines handelsüblichen Acrylat-verdikkers mit 0,95 % Wasser vermischt. Dazu werden 0,1 % eines handelsüblichen ionischen Emulgators, 0,2 % eines Entschäumers und 1,8 % Wasser zugesetzt und homogenisiert. In diese Mischung werden 17,0 % Titandioxid, 3,8 % Talkum und 0,05 % Ruß nacheinander eindispergiert. Nach Einstellen der Viskosität mit ca. 1,5 % Wasser wird die Mischung 30 min. auf einer Perlmühle vermahlen.

### Beispiel 6

Zu 82,2 % der Komponente nach Beispiel 3 werden 11,2 % einer Lösung aus 4,65 % eines Gemisches aus aliphatischen Kohlenwasserstoffen und 6,65 % eines Gemisches von oligomeren Biuret- und Isocyanuratgruppenhaltigen HDI-Kondensationsprodukten mit einem NCO-Gehalt von 22 % gegeben und homogen untergerührt. Dann wird mit 6,6 % Wasser die Applikationsviskosität eingestellt.

### Beispiel 7

Zu 89,4 % der Komponente nach Beispiel 4 werden 9,3 % einer Lösung aus 3,0 % eines Gemisches aus aliphatischen Kohlenwasserstoffen und 6,3 % eines Gemisches von oligomeren Biuret- und Isocyanuratgruppenhaltigen HDI-Kondensationsprodukten mit einem NCO-Gehalt von 22 % gegeben und homogen untergerührt. Dann werden 1,3 % des Lösungsmittel untergemischt und die Applikationsviskosität eingestellt.

### Beispiel 8

Zu 80,4 % der Komponente nach Beispiel 5 werden 5,9 % eines Gemisches von oligomeren Biuret- und Isocyanuratgruppenhaltigen HDI-Kondensationsprodukten mit einem NCO-Gehalt von 22 % gegeben und homogen untergerührt. Dann werden 13,65 % Wasser zugesetzt um die Applikationsvikosität einzustellen.

### Haftgrundierungsversuche:

Die resultierenden Grundierungsüberzugsmittel werden mittels Spritzapplikation auf ein entfettetes Kunststoffsubstrat (Hostalen PPX 653 der Hoechst AG) in ca. 25 µm Trockenfilmdicke aufgebracht. Der Film wird nach 15 min. Ablüften 15 min. bei 80°C getrocknet. Danach kann ein handelsüblicher weiterer Lackaufbau erfolgen.

| | | |
|---|---|---|
| Lackaufbau: | 25 µm | 2K-Grundierung gemäß Beispiel 6 bis 8 |
| | 15 µm | handelsüblicher Wasserbasislack (Diamantsilber 65 120 der Herberts GmbH |
| | 35 µm | handelsüblicher Zweikomponenten-Polyurethan-Klarlack (47 891 der Herberts GmbH) |

Die Prüfung auf Feuchtraumbeständigkeit (DIN 50017, Kondenswasserprüfklimate, Haftung zu Nachfolgeschichten) und die Elastizität im Biegetest auch bei - 20°C (DIN 53 152 oder ISO 6860 Verbund zum Substrat) zeigen ein gutes Ergebnis.

Ein Vergleichsversuch wurde analog Beispiel 4 ohne CPO-Polymer im Überzugsmittel durchgeführt. Der Versuch zeigte ein wesentlich schlechteres Ergebnis in der Haftungsprüfung.

### Beispiel 9

Es werden 36,9 % einer wäßrigen Acrylatdispersion (Bayhydrol VPLS 2940 FK 30 %) unter Rühren mit 7,4 % vollentsalztem Wasser, 1,3 % eines handelsüblichen Acrylatverdickers, 0,15 % eines handelsüblichen Emulgators und 0,25 % eines handelsüblichen Entschäumers versetzt und danach zu der Mischung 22,2 % Titandioxyd zugegeben. Die Mischung wird homogen gerührt und auf einer Perlmühle vermahlen. Zu dieser Mischung werden 25,2 % eines handelsüblichen CPO ( 20 % in Xylol ) gegeben und homogenisiert.

Zu der oben erhaltenen Bindemittelmischung werden 6,6 % eines handelsüblichen Gemisches aus oligomerem HDI-Kondensationsprodukt mit einem NCO-Gehalt von 22 % gegeben und homogen gemischt. Mit wenig Wasser wird auf Spritzviskosität eingestellt.

Das oben erhaltene Decklack-Überzugsmittel wird durch Spritzapplikation auf ein entfettetes Kunststoffsubstrat in ca. 40 µm Trockenfilmdicke aufgebracht. Der Film wird nach 15 Min. Ablüften 15 Min. bei 80°C getrocknet.

Es wird die Elastizität im Biegetest (Iso 6860 oder DIN 53152) getestet.

Die Haftung zum Substrat ist gut.

Die Haftung zum Substrat ist deutlich besser als ein Vergleichsversuch, der ohne CPO-Lösung durchgeführt wurde.

## Patentansprüche

1. Wäßriges Überzugsmittel auf der Basis eines oder mehrerer Polyole mit ionischen oder in ionische Gruppen überführbaren Gruppen, das Pigmente, Füllstoffe und/oder weitere lackübliche Additive und/oder Lösemittel enthalten kann, dadurch gekennzeichnet, daß es enthält:
A) 10 bis 40 Gew.-% eines oder mehrerer Polyole mit einem Zahlenmittel der Molmasse (Mn) von 500 - 200000, einer OH-Zahl von 15 bis 300 und einem Gehalt von 5 - 400 Milliäquivalenten/100 g Festharz, ionischen Gruppen und/oder in ionische Gruppen überführbaren Gruppen, die zumindest teilweise in neutralisierter Form vorliegen,
B) 0,5 bis 10 Gew.-% eines oder mehrerer chlorierter Polyolefine mit einem Chlorierungsgrad von 15 bis 35 Gew.-%,
C) 5 bis 40 Gew.-% eines oder mehrerer aromatischer Lösemittel mit einem Siedebereich von 100 - 160°C,
D) 25 bis 75 Gew.-% Wasser,
E) 0 bis 30 Gew.-% eines oder mehrerer weiterer wasserverdünnbarer Bindemittel, die keine NCO-reaktiven Gruppen tragen,
wobei sich die Summe der Gew.-% der Komponenten A) bis E) auf 100 Gew.-% addiert, und
F) ein oder mehrere Polyisocyanate mit im Durchschnitt mindestens zwei freien Isocyanatgruppen pro Molekül, in einer derartigen Menge, daß die Anzahl der reaktiven Isocyanatgruppen zu den OH-Gruppen der Polyole im Verhältnis von 0,5 : 1 bis 5 : 1 liegt,
wobei das Überzugsmittel als Zweikomponentensystem vorliegt, und eine Komponente die Polyole und die andere Komponente die Polyisocyanate enthält.

2. Wäßriges Überzugsmittel nach Anspruch 1, dadurch gekennzeichnet, daß es in der Komponente A anionische und/oder in anionische Gruppen überführbare Substituenten aufweist.

3. Wäßrige Emulsion auf der Basis eines oder mehrerer Polyole mit ionischen oder in ionische Gruppen überführbaren Gruppen, geeignet zur Herstellung der wäßrigen Überzugsmittel nach Anspruch 2, dadurch gekennzeichnet, daß sie enthält:
A) 10 bis 40 Gew.-% eines oder mehrerer Polyole mit einem Zahlenmittel der Molmasse (Mn) von 500 bis 200000, einer OH-Zahl von 15 bis 300 und einem Gehalt von 5 bis 400 Milliäquivalenten/100 g Festharz, ionischer Gruppen und/oder in ionische Gruppen überführbarer Gruppen, die zumindest teilweise in neutralisierter Form vorliegen.
B) 0,5 bis 10 Gew.-% eines oder mehrerer chlorierter Polyolefine mit einem Chlorierungsgrad von 15 - 35 Gew.-%,
C) 5 bis 40 Gew.-% eines oder mehrerer aromatischer Lösemittel mit einem Siedebereich von 100 - 160 °C, sowie
D) 25 bis 75 Gew.-% Wasser.

4. Wäßrige Emulsion nach Anspruch 3, dadurch gekennzeichnet, daß sie in der Komponente A) anionische und/oder in anionische Gruppen überführbare Gruppen aufweist.

5. Überzugsmittel bzw. Emulsion nach einem der Ansprüche 1 bis 4 dadurch gekennzeichnet, daß das Polyol auf radikalisch polymerisierbaren, olefinisch ungesättigten Monomeren mit einer OH-Zahl von 15 - 300 und einer Säurezahl von 2 - 250 basiert.

6. Überzugsmittel bzw. Emulsion nach einem der Ansprüche 1 bis 4 dadurch gekennzeichnet, daß das Polyol ein Polyurethanharz mit einer OH-Zahl von 20 - 200 und einer Säurezahl von 10 - 200 ist.

7. Überzugsmittel bzw. Emulsion nach einem der Ansprüche 1 bis 4, dadurch gekennzeichnet, daß das Polyol ein Polyester mit einer OH-Zahl von 20 - 200 und einer Säurezahl von 20 - 150 ist.

8. Überzugsmittel bzw. Emulsion nach einem der Ansprüche 1 bis 7, dadurch gekennzeichnet, daß es bzw. sie im wesentlichen oder gänzlich frei von Emulgatoren ist.

9. Verfahren zur Herstellung einer wäßrigen Emulsion nach einem der Ansprüche 3 bis 8, dadurch gekennzeichnet, daß man ein oder mehrere chlorierte Polyolefine mit einem Chlorierungsgrad von 15 - 35 Gew.-% zusammen mit einem oder mehreren aromatischen Lösemitteln, in den in Anspruch 3 angegebenen Mengen, gegebenenfalls löst, und mit der wasserverdünnbaren Polyolkomponente, wie in Anspruch 3 definiert und der in Anspruch 3 angegebenen Menge vermischt, wobei die wasserverdünnbare Polyolkomponente bereits in mit Wasser verdünnter Form vorliegen kann oder das Gemisch anschließend in Wasser eingebracht wird, worauf ohne Emulgatorzusatz mit einem Dispergieraggregat homogenisiert wird.

10. Verfahren zur Herstellung der Überzugsmittel nach einem der Ansprüche 1, 2 und 5 bis 8, dadurch gekennzeichnet, daß man die gemäß Anspruch 9 erhaltene Emulsion mit den übrigen Komponenten vermischt.

11. Verwendung der Überzugsmittel nach einem der Ansprüche 1, 2 und 5 bis 8, und erhältlich nach Anspruch 10 zur Herstellung von Grundierungsschichten, Einschichtlackierungen oder zur Herstellung vcn Basislackschichten in Mehrschichtlackierungen.

12. Verwendung nach Anspruch 11, dadurch gekennzeichnet, daß die Einschichtlackierung oder die Basislackschicht direkt auf ein zu lackierendes Kunststoffsubstrat ohne vorherige Grundierung aufgebracht wird.

13. Verwendung der Überzugsmittel nach einem der Ansprüchel, 2 und 5 bis 8, oder erhältlich nach Anspruch 10 als Grundierungsmittel für Kunststoffsubstrate.

14. Verwendung nach einem der Ansprüche 11 bis 13, dadurch gekennzeichnet, daß als Substrate Polyolefine, die modifiziert sein können, eingesetzt werden.

15. Verwendung nach einem der Ansprüche 11 bis 14, dadurch gekennzeichnet, daß nach der Applikation der Überzugsmittel bei Temperaturen von 20°C bis 100°C getrocknet wird.

16. Verwendung nach einem der Ansprüche 11 bis 15 bei der Lackierung von Kraftfahrzeugen und Kraftfahrzeugteilen.

## Claims

1. An aqueous coating medium based on one or more polyols comprising ionic groups or groups which can be converted into ionic groups, which may contain pigments, extenders and/or further customary lacquer additives and/or solvents, characterised in that it contains:
A) 10 to 40 % by weight of one or more polyols having a number average molecular weight (Mn) of 500 - 200,000, an OH number of 15 to 300 and a content of 5 - 400 milliequivalents/100 g of solid resin of ionic groups and/or groups which can be converted into ionic groups, which are present at least in part in neutralised form,
B) 0.5 to 10 % by weight of one or more chlorinated polyolefines having a degree of chlorination of 15 to 35 % by weight,
C) 5 to 40 % by weight of one or more aromatic solvents with a boiling range of 100 - 160°C,
D) 25 to 75 % by weight of water,
E) 0 to 30 % by weight of one or more further water-thinnable binder vehicles which contain no groups which are reactive with NCO,
wherein the sum of the percentages by weight of components A) to E) adds up to 100 % by weight, and
F) one or more polyisocyanates containing on average at least two free isocyanate groups per molecule, in an amount such that the number of reactive isocyanate groups to the OH groups of the polyol is in the ratio of 0.5 : 1 to 5 : 1,
wherein the coating medium exists as a two-component system, and one component contains the polyols and the other component contains the isocyanates.

2. An aqueous coating medium according to claim 1, characterised in that it comprises, in component A), anionic groups and/or substituents which can be converted into anionic groups.

3. An aqueous emulsion based on one or more polyols comprising ionic groups or groups which can be converted into ionic groups, suitable for producing the aqueous coating medium according to claim 2, characterised in that it contains:
A) 10 to 40 % by weight of one or more polyols having a number average molecular weight (Mn) of 500 - 200,000, an OH number of 15 to 300 and a content of 5 - 400 milliequivalents/100 g of solid resin of ionic groups and/or groups which can be converted into ionic groups, which are present at least in part in neutralised form,
B) 0.5 to 10 % by weight of one or more chlorinated polyolefines having a degree of chlorination of 15 to 35 % by weight,
C) 5 to 40 % by weight of one or more aromatic solvents with a boiling range of 100 - 160°C, and
D) 25 to 75 % by weight of water.

4. An aqueous emulsion according to claim 3, characterised in that it comprises, in component A), anionic groups and/or groups which can be converted into anionic groups.

5. A coating medium or emulsion according to any one of claims 1 to 4, characterised in that the polyol is based on olefinically unsaturated monomers which can be polymerised by a radical mechanism, and which have an OH number of 15 - 300 and an acid number of 2 - 250.

6. A coating medium or emulsion according to any one of claims 1 to 4, characterised in that the polyol is a polyurethane resin with an OH number of 20 - 200 and an acid number of 10 - 200.

7. A coating medium or emulsion according to any one of claims 1 to 4, characterised in that the polyol is a polyester resin with an OH number of 20 - 200 and an acid number of 20 - 150.

8. A coating medium or emulsion according to any one of claims 1 to 7, characterised in that it is substantially or completely free from emulsifiers.

9. A process for producing an aqueous emulsion according to any one of claims 3 to 8, characterised in that one or more chlorinated polyolefines having a degree of chlorination of 15 - 35 % by weight are mixed together with, and optionally dissolved in, one or more aromatic solvents in the amounts given in claim 3, and with the water-thinnable polyol component as defined in claim 3 and in the amount given in claim 3, wherein the water-thinnable polyol component may already be present in a form thinned with water or the mixture is subsequently introduced into water, whereupon homogenisation is effected using a dispersing installation without the addition of emulsifier.

10. A process for producing the coating media according to any one of claims 1, 2 and 5 to 8, characterised in that the emulsion obtained according to claim 9 is mixed with the other components.

11. A use of the coating media according to any one of claims 1, 2 and 5 to 8, and which are obtainable according to claim 10, for producing primer coats or single-layer coatings or for producing base lacquer coats in multi-layer coatings.

12. A use according to claim 11, characterised in that the single-layer coating or the base lacquer coat is applied directly to a plastics substrate to be coated, without prior priming.

13. A use of the coating media according to any one of claims 1, 2 and 5 to 8, or which are obtainable according to claim 10, as a primer for plastics substrates.

14. A use according to any one of claims 11 to 13, characterised in that polyolefines, which may be modified, are used as substrates.

15. A use according to any one of claims 11 to 14, characterised in that after application of the coating media drying is effected at temperatures of 20°C to 100°C.

16. A use according to any one of claims 11 to 15 in the coating of motor vehicles and motor vehicle parts.

## Revendications

1. Produit de revêtement aqueux à base d'un ou de plusieurs polyols à groupes ioniques ou à groupes pouvant être convertis en groupes ioniques, qui peut contenir des pigments, des charges et/ou d'autres additifs usuels dans des peintures, caractérisé en ce qu'il contient:
A) 10 à 40 % en poids d'un ou de plusieurs polyols ayant une moyenne en nombre de la masse moléculaire (Mn) allant de 500 à 200 000, un indice de groupes OH allant de 15 à 300, et une teneur en groupes ioniques et/ou en groupes pouvant être convertis en groupes ioniques allant de 5 à 400 milliéquivalents/100 g de résine solide, qui se trouvent au moins en partie sous forme neutralisée,
B) 0,5 à 10 % en poids d'une ou de plusieurs polyoléfines chlorées ayant un degré de chloration allant de 15 à 35 % en poids,
C) 5 à 40 % en poids d'un ou de plusieurs solvants aromatiques ayant un domaine d'ébullition de 100-160°C,
D) 25 à 75 % en poids d'eau,
E) 0 à 30 % en poids d'un ou de plusieurs autres liants pouvant être dilués avec de l'eau, qui ne portent pas de groupes réactifs avec NCO,
la somme des pourcentages en poids des composants A) à E) étant égale à 100 % en poids, et
F) un ou plusieurs polyisocyanates comportant en moyenne au moins deux groupes isocyanate libres par molécule, en une quantité telle que le rapport du nombre des groupes isocyanate réactifs au nombre des groupes OH des polyols va de 0,5:1 à 5:1,
le produit de revêtement se trouvant sous forme d'un système à deux composants, et un composant contenant les polyols et l'autre composant contenant les polyisocyanates.

2. Produit de revêtement aqueux selon la revendication 1, caractérisé en ce qu'il comporte dans le composant A des substituants anioniques et/ou des substituants pouvant être convertis en groupes anioniques.

3. Emulsion aqueuse à base d'un ou de plusieurs polyols à groupes ioniques ou groupes pouvant être convertis en groupes ioniques, appropriée à la préparation du produit de revêtement aqueux selon la revendication 2, caractérisée en ce qu'elle contient:
A) 10 à 40 % en poids d'un ou de plusieurs polyols ayant une moyenne en nombre de la masse moléculaire (Mn) allant de 500 à 200 000, un indice de groupes OH allant de 15 à 300, et une teneur en groupes ioniques et/ou en groupes pouvant être convertis en groupes ioniques allant de 5 à 400 milliéquivalents/100 g de résine solide, qui se trouvent au moins en partie sous forme neutralisée,
B) 0,5 à 10 % en poids d'une ou de plusieurs polyoléfines chlorées ayant un degré de chloration allant de 15 à 35 % en poids,
C) 5 à 40 % en poids d'un ou de plusieurs solvants aromatiques ayant un domaine d'ébullition de 100-160°C, ainsi que
D) 25 à 75 % en poids d'eau.

4. Emulsion aqueuse selon la revendication 3, caractérisée en ce qu'elle comporte, dans le composant A), des groupes anioniques et/ou des groupes pouvant être convertis en groupes anioniques.

5. Produit de revêtement ou émulsion selon l'une des revendications 1 à 4, caractérisé(e) en ce que le polyol est à base de monomères à insaturation oléfinique, aptes à la polymérisation radicalaire et ayant un indice de groupes OH allant de 15 à 300 et un indice d'acide allant de 2 à 250.

6. Produit de revêtement ou émulsion selon l'une des revendications 1 à 4, caractérisé(e) en ce que le polyol est une résine polyuréthanne ayant un indice de groupes OH allant de 20 à 200 et un indice d'acide allant de 10 à 200.

7. Produit de revêtement ou émulsion selon l'une des revendications 1 à 4, caractérisé(e) en ce que le polyol est un polyester ayant un indice de groupes OH allant de 20 à 200 et un indice d'acide allant de 20 à 150.

8. Produit de revêtement ou émulsion selon l'une des revendications 1 à 7, caractérisé(e) en ce qu'il ou elle est pratiquement ou totalement exempt(e) d'émulsifiants.

9. Procédé pour la préparation d'une émulsion aqueuse selon l'une des revendications 3 à 8, caractérisé en ce que l'on dissout éventuellement une ou plusieurs polyoléfines chlorées, ayant un degré de chloration de 15-35 % en poids, conjointement avec un ou plusieurs solvants aromatiques, en les quantités indiquées dans la revendication 3, et on les mélange avec le composant polyol pouvant être dilué avec de l'eau, tel que défini dans la revendication 1, et en la quantité indiquée dans la revendication 3, le composant polyol qui peut être dilué avec de l'eau pouvant se trouver déjà sous forme diluée avec de l'eau, ou le mélange étant ensuite introduit dans de l'eau, à la suite de quoi on l'homogénéise à l'aide d'un appareil de dispersion, sans addition d'émulsifiant.

10. Procédé pour la préparation du produit de revêtement selon l'une des revendications 1, 2 et 5 à 8, caractérisé en ce que l'on mélange l'émulsion obtenue selon la revendication 9 avec les autres composants.

11. Utilisation du produit de revêtement selon l'une des revendications 1, 2 et 5 à 8, et pouvant être obtenu selon la revendication 10, pour la préparation de couches primaires, de peintures monocouches ou pour la préparation de couches de revêtement primaires, de compositions de peintures monocouches ou pour la préparation de couches de base dans des compositions de peintures multicouches.

12. Utilisation selon la revendication 11, caractérisée en ce que la composition de peinture monocouche ou la couche de base est appliquée directement sur un support en matière plastique à peindre, sans application préalable d'un primaire.

13. Utilisation du produit de revêtement selon l'une des revendications 1, 2 et 5 à 8, ou pouvant être obtenu selon la revendication 10, en tant que primaire pour supports en matière plastique.

14. Utilisation selon l'une des revendications 11 à 13, caractérisée en ce que, comme supports, on utilise des polyoléfines qui peuvent être modifiées.

15. Utilisation selon l'une des revendications 11 à 14, caractérisée en ce que, après l'application du produit de revêtement, on effectue un séchage à des températures de 20 à 100°C.

16. Utilisation selon l'une des revendications 11 à 15, dans le peinturage de véhicules automobiles et de pièces pour automobiles.
